# EUROPÄISCHE PATENTSCHRIFT

(11) **EP 3 217 072 B1**
(45) Veröffentlichungstag und Bekanntmachung des Hinweises auf die Patenterteilung: **05.08.2020**
(21) Anmeldenummer: 16159374.4
(22) Anmeldetag: 09.03.2016
(51) Int. Cl.: F21S 8/06, F21V 8/00, F21Y 103/00, F21V 17/10, F21V 23/00, F21Y 103/10, F21Y 115/10, F21Y 101/00

(54) **LEUCHTE, INSBESONDERE PENDELLEUCHTE**
LUMINAIRE, IN PARTICULAR SUSPENDED LUMINAIRE
LUMINAIRE, NOTAMMENT LUMINAIRE SUSPENDU

(43) Veröffentlichungstag der Anmeldung: 13.09.2017
(73) Patentinhaber: Engel, Hartmut S., 71634 Ludwigsburg (DE)
(72) Erfinder: Engel, Hartmut S., 71634 Ludwigsburg (DE)
(74) Vertreter: Manitz Finsterwald Patent- und Rechtsanwaltspartnerschaft mbB

(56) Entgegenhaltungen:
- EP-A1- 2 829 792
- DE-U1-202014 104 031
- US-A1- 2015 055 369
- US-A1- 2015 177 439

## Beschreibung

Die Erfindung betrifft eine Leuchte, insbesondere Pendelleuchte, mit einer eine raumseitige Direktlichtfläche bildenden Lichtleitscheibe und einer Funktionseinheit mit einer zumindest einer Längsseite der Lichtleitscheibe zugeordneten streifenförmigen Anordnung von LEDs zur Einkopplung von Licht in die Lichtleitscheibe, wobeidie rahmenlos ausgebildete Lichtleitscheibe über ihren schmalseitigen Umfang mit einer Reflexionsschicht und mittig mit einer schmalen, langgestreckten Ausnehmung zur Aufnahme der Funktionseinheit versehen ist.

Leuchten dieser Art, die im Regelfall zur Innenraumbeleuchtung dienen, zeichnen sich durch eine flache Bauweise aus und nutzen die Vorteile der Langlebigkeit und des geringen Energieverbrauchs der als Leuchtmittel eingesetzten LEDs.

Eine Leuchte der eingangs angegebenen Art ist aus der DE 20 2014 104031 U1 bekannt. Bei der bekannten Leuchte ist in einer Lichtleitplatte eine teilweise oder ganz durchgehende Kavität vorgesehen, wobei an einem sich in die Kavität erstreckenden Trägerelement LEDs angebracht sind und das von diesen emittierte Licht entweder direkt oder über reflektierende Umlenkflächen zu den benachbarten Stirnflächen der jeweiligen Kavität geleitet und somit in die Lichtleitscheibe eingekoppelt wird. Die Lichtleitscheibe kann dabei rahmenlos ausgebildet und über ihren schmalseitigen Umfang mit einer Reflexionsschicht versehen sein. Zur Ableitung von Wärme kann die Trägerfläche für die LEDs mit einem Kühlkörper verbunden sein, der sich außerhalb der Kavität befindet.

Aus der US 2015/0055369 A1 ist eine Leuchte bekannt, die aus zumindest zwei Lichtleitflächen besteht, die mit gegenseitigem Abstand, d.h. unter Ausbildung eines Zwischenraums zwischen zwei streifenförmigen Strukturelementen gehalten werden. Im Zwischenraum sind an der Unterseite des einen Elementes mehrere LEDs angebracht und diesen gegenüberliegend ist auf dem weiteren Strukturelement eine insbesondere keilförmige Reflexionseinheit angebracht, so dass von den LEDs abgestrahltes Licht in die Stirnflächen der beiden Lichtleitscheiben eingekoppelt werden kann. An der Außenseite des die LEDs tragenden Strukturelementes kann ein Kühlelement befestigt sein.

Aufgabe der vorliegenden Erfindung ist es, Leuchten der eingangs angegebenen Art unter gleichzeitiger Minimierung der Komplexität der konstruktiven Aufbaustruktur und der Werkzeugkosten so auszubilden, dass unter Realisierung eines ultraflachen Erscheinungsbildes der Leuchte eine gleichmäßige Lichtfläche und eine besonders breite Lichtverteilung im Raum erhalten wird, und zwar raumfüllend und blendfrei.

Gelöst wird diese Aufgabe nach der Erfindung im Wesentlichen dadurch, dass die Funktionseinheit zumindest einen sich im Wesentlichen über die Länge der Ausnehmung und in die Ausnehmung erstreckenden Kühlkörper aufweist, an dem seitlich und der Lichtleitscheibe gegenüberliegend die streifenförmig angeordneten LEDs vorgesehen sind, dass der Kühlkörper auf einem sich über die Länge der Lichtleitscheibe erstreckenden und diese haltenden

Trag- und Reflexionsprofil befestigt ist, dessen Breite so gewählt ist, dass beiderseits des Kühlkörpers zusammen mit einem gegenüberliegenden Deck- und Reflexionsprofil jeweils eine Lichtkammer gebildet wird, in der die den streifenförmigen LEDs zugeordneten innenliegenden Lichteinkopplungsbereiche der Lichtleitscheibe aufgenommen sind.

Durch die rahmenlose Lichtfläche und die mittige Integration von Funktionseinheit und Kühlkörper in die Lichtleitscheibe wird das angestrebte, besonders flache Erscheinungsbild ermöglicht.

Durch den sich praktisch über die gesamte Länge der Leuchte erstreckenden massiven Kühlkörper, der das stabile Rückgrat der Leuchte bildet, wird die im Betrieb entstehende Wärme auch über die Gesamtstruktur sehr effizient nach außen abgeleitet. Die so erzielbare geringe Betriebstemperatur trägt wesentlich zu einer deutlich verlängerten Lebensdauer der LEDs bei voller Performance bei.

Die Vielzahl der eng aneinandergereihten LEDs muss für die praktisch geforderte Lichtleistung nur mit etwa 50% der maximal möglichen Leistung bestromt werden, wodurch einerseits wesentlich weniger Wärme erzeugt und andererseits thermische Leistungsreserven für eine gegebenenfalls gewünschte "Tuning white"-Bestückung zur Tageslichtsteuerung bereitgehalten werden können.

Trotz der Flachheit der Leuchte wird somit ein optimales Thermomanagement für die Kühlung der LEDs bei allen denkbaren Betriebszuständen der Leuchte sichergestellt.

Durch die Vielzahl der in Streifenform angeordneten LEDs müssen diese nicht mit maximaler Leistung betrieben werden, sondern erbringen auch bereits im Bereich von 40 % bis 60 % der Maximalleitung die in den meisten Fällen ausreichende Lichtleistung.

Von besonderer Bedeutung ist, dass die erfindungsgemäß ausgebildeten Lichtkammern zwischen den Reflexionsprofilen eine optimale Kanteneinstrahlung einerseits und ausgeprägte Reflexions- bzw. Lichtumlenkungseffekte im Bereich dieser Lichtkammern erbringen, was wiederum eine sehr gleichmäßige, streifenfreie Lichtverteilung von innen nach außen in der Lichtleitscheibe sicherstellt.

Die Lichtleitscheibe selbst ist zumindest an einer Oberfläche mit mikrooptischen Feinstrukturen oder stark reflektierenden Punktmustern versehen, wobei jeder dabei gebildete Auskoppelpunkt seine eigene Lichtverteilungskurve besitzt und es diese Feinstruktur damit erlaubt, die gewünschten Lichtverteilungseigenschaften im Raum gezielt zu optimieren.

Eine durch die erfindungsgemäße Gestaltung erreichte kompakte und schlanke Funktionsstruktur ist eine Folge des sandwichartigen Ineinandergreifens der einzelnen Komponenten, wobei das Deck- und Reflexionsprofil von einem mit dem Kühlkörper verschraubbaren flachen Abdeckgehäuse übergriffen wird, dessen Breite im Wesentlichen der Breite des Trag- und Reflexionsprofils entspricht.

Von besonderem Vorteil ist des Weiteren, dass oberhalb der LED-Streifenanordnung ein vom Kühlkörper, dem Deck- und Reflexionsprofil und dem Abdeckgehäuse begrenzter Verkabelungsraum mit Steckklemmen zur Verbindung aufeinanderfolgend angeordneter LED-Streifenabschnitte sowie zur Verbindung mit den elektronischen Komponenten der Leuchte vorgesehen ist.

Durch die damit ermöglichte einfache Zusammenschaltung einzelner LED-Streifeneinheiten und die Verbindung der Gesamtanordnung über kurze Verbindungsleitungen mit den zugehörigen elektronischen Komponenten der Leuchte wird die Montage erleichtert und die Funktionssicherheit erhöht.

Eine besondere vorteilhafte Ausführungsvariante der Erfindung zeichnet sich dadurch aus, dass das Deck- und Reflexionsprofil aus einem vorzugsweise weißopalen Profilabschnitt besteht, der aus einem Spezialkunststoff mit einem Reflexionsgrad von etwa 98,2% hergestellt wird. Dadurch kann die Effizienz des Lichtsystems gesteigert werden.

Auf diese Weise werden Lichtkammern erhalten, die einseitig von einem hochreflektierenden Kunststoff-Profilteil begrenzt sind, wodurch sich in den Lichtkammern besonders ausgeprägte Reflexions- und Lichtumlenkvorgänge erzielen lassen, die eine absolut gleichmäßige Lichtverteilung im sichtbaren Bereich der Lichtleitscheibe gewährleisten.

Bevorzugt sind diese Kunststoff-Profilteile kühlkörperseitig mit einer Abwinklung versehen, die eine exakte Vorgabe eines minimalen Abstandes zwischen den LED-Streifen und der Lichteinkopplungs-Stirnseite der Lichtleitscheibe ermöglichen.

Neben der durch den stabilen Kühlkörper sichergestellten Längsstabilität der Leuchte wird gemäß der Erfindung auch eine hohe Querstabilität erhalten.

Der konstruktive Aufbau in Sandwichbauweise hat den Vorteil, dass das mittig aufgeschnittene Lichtpanel von oben und unten gefasst wird und durch die vorgesehene Schraubverbindung toleranzunempfindlich eingespannt werden kann.

Damit wird der aufgeschnittene Teil des Panels bzw. der Lichtleitscheibe wieder perfekt verbunden, so dass diese Lichtleitscheibe mindestens die Stabilität einer einteiligen Ausführung zurückerhält.

Dabei ist auch wesentlich, dass das vorzugsweise aus einem Aluminiumprofil bestehende Abdeckgehäuse einen vertikal auf dem die Lichtkammer einseitig begrenzenden Kunststoff-Profilteil abgestützten Einspannsteg besitzt und die sich bis zur Lichtleitscheibe erstreckende Seitenwand des Abdeckgehäuses eine weitere Stützstelle bildet und bevorzugt eine innenliegende Ausnehmung zur Aufnahme des freien Endes des Kunststoff-Profilteils aufweist.

Eine weitere zu erwähnende Besonderheit der Erfindung besteht darin, dass zur Aufnahme von elektronischen Komponenten wie Treiber, Controller und dergleichen ein separates Gehäuse vorgesehen ist, das thermisch getrennt auf dem Abdeckgehäuse oder getrennt davon an der Decke befestigbar ist.

Nach einer Ausführungsvariante der Erfindung ist vorzugsweise mittig im Trag-und Reflexionsprofil und in dem daran angrenzenden Kühlkörper eine Ausnehmung zur Aufnahme einer Sensoreinheit zur Tageslichtsteuerung und/oder Präsenzmeldung vorgesehen. Die für diese Sensoreinheit benötigte Verbindungsleitung zur Elektronik wird direkt über entsprechende Durchlässe in das Elektronikgehäuse geführt, wobei dazu ein abgeschirmtes Kabel mit Mikrostecker verwendet wird.

Zur Effizienzsteigerung der Leuchte wird in der vom Raum abgewandten Oberfläche der Lichtleitscheibe vorzugsweise eine Mikrostruktur eingebracht, die aus einer Vielzahl von entweder direkt aneinandergrenzenden, gering beabstandeten oder geringfügig ineinandergreifenden Doppelpunkt-Auskoppelprismen besteht. Dabei sind die Doppelpunkt-Auskoppelprismen in geraden Reihen angeordnet und die durch die Mittelpunkte der Doppelpunkt-Auskoppelprismen verlaufenden Mittelachsen sind in aufeinanderfolgenden Reihen jeweils unter einem ersten Anordnungswinkel und einem dazu um 90° gedrehten zweiten Anordnungswinkel angeordnet.

Vorzugsweise sind dabei die Doppelpunkt-Auskoppelprismen mit erstem Anordnungswinkel bezüglich der Doppelpunkt-Auskoppelprismen mit zweitem Anordnungswinkel in den jeweiligen geraden Reihen versetzt zueinander.

Mittels der zuletzt genannten Ausführungsvariante erhält man die Möglichkeit, das Rastermaß der Matrix zu verkleinern und damit mehr Auskoppelpunkte pro Flächeneinheit zu erhalten, was eine Effizienzsteigerung des Systems ermöglicht.

Für den Fall, dass eine Leuchtdichtebegrenzung von 3000 cd/m² für die Büronorm nicht überschritten werden soll, muss ein Überschuss an ausgekoppeltem Licht in einer Optimierungsrechnung zum Doppelpunktabstand entsprechend begrenzt werden.

Stellt die erwähnte Leuchtdichtebegrenzung keine strikt einzuhaltende Begrenzung dar, kann die Anzahl der Auskoppelpunkte durch Reduzierung des Abstands für eine optimale Effizienz weiter erhöht werden, wobei jedoch stets eine deutliche Transparenz der Lichtleitscheibe zu gewährleisten ist.

Die in der jeweiligen Lichtleitscheibe verwendeten Auskoppelpunkte, insbesondere die Doppelpunkt-Auskoppelprismen können rotationssymmetrische Kegel oder Kegelstümpfe sein. Ebenfalls geeignet sind mehrflächige Prismen mit Mehreck-Grundfläche, insbesondere quadratischer oder sechseckiger Grundfläche, wobei sich die jeweiligen Lichtverteilungskurven berechnen lassen und auch der Wert der Leuchtdichtebegrenzung von 3000 cd/m² für die Büronorm bei leistungsgemäßer Lichtleistung eingehalten werden kann.

Nach einer weiteren Ausführungsvariante der Erfindung wird eine LED-Streifenanordnung aus kleinflächigen, dicht aneinandergrenzend angeordneten LEDs mit jeweils wechselnder Farbtemperatur vorgesehen, wobei die einzelnen Farbkreise getrennt über einen Doppelkanaltreiber ansteuerbar sind.

Durch die kleinflächigen LEDs und ihre dicht aneinandergrenzende Anordnung wird in Verbindung mit der speziellen Lichtführungstechnik im Einstrahlbereich der Lichtleitscheibe eine äußerst gleichmäßige und völlig streifenfreie Ausleuchtung der Lichtleitscheibe sichergestellt.

Weitere Besonderheiten und Vorteile der Erfindung ergeben sich aus der nachfolgenden Beschreibung von Ausführungsbeispielen der Erfindung unter Bezugnahme auf die Zeichnung.

In der Zeichnung zeigt:
- Fig. 1: eine perspektivische Schrägansicht einer Ausführungsform einer erfindungsgemäßen Leuchte von oben im nicht eingeschalteten Zustand und damit durchsichtiger Lichtleitfläche,
- Fig. 2: eine Darstellung der Komponenten der Leuchte nach Fig. 1 wie sie im Wesentlichen vor der Montage vorliegen,
- Fig. 3: eine perspektivische Draufsicht dieser Leuchte im teilweise montierten Zustand,
- Fig. 4: eine schematische Teil-Querschnittsdarstellung einer erfindungsgemäßen Leuchte,
- Fig. 5: eine schematische Querschnittsdarstellung einer bevorzugten Ausführungsform einer Leuchte nach der Erfindung,
- Fig. 6: eine Teil-Schnittdarstellung zur Erläuterung einer bevorzugten Verkabelung,
- Fig. 7: eine schematische perspektivische Teil-Schnittansicht der Leuchte nach Fig. 5 mit integrierter Sensoreinheit,
- Fig. 8: eine schematische perspektivische Darstellung einer Lichtleitscheibe mit eingeprägten Mikroprismen in Form von Doppelpunkt-Auskoppelprismen,
- Fig. 9 und 10: jeweils eine Draufsicht, einen Schnitt sowie eine Detailansicht zweier bevorzugter Ausführungsformen von Prismengestaltungen in der vom Raum abgewandten Oberfläche der Lichtleitscheibe, und
- Fig. 11: für eine erfindungsgemäße Leuchte typische Lichtverteilungskurven durch Doppelpunkt-Auskoppelprismen.

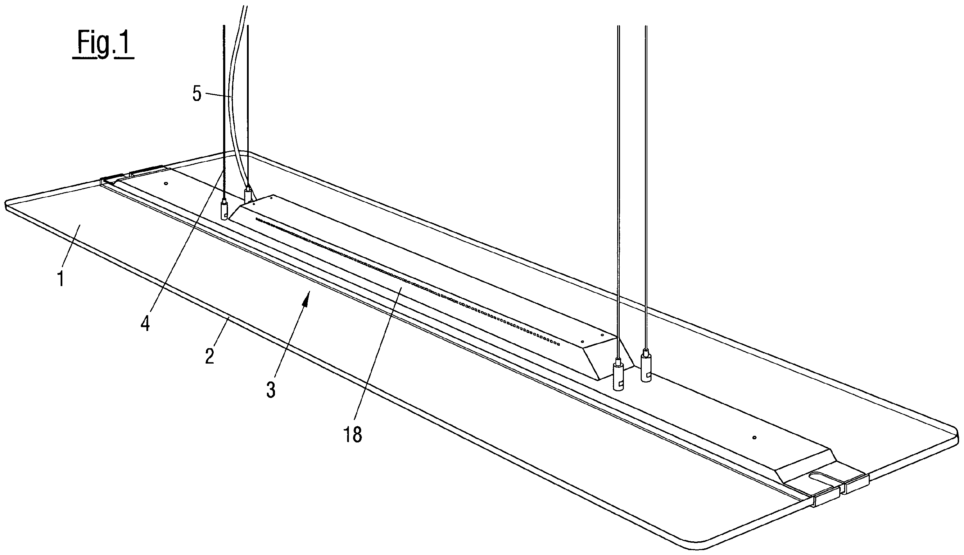

Fig. 1 zeigt eine erfindungsgemäße Pendelleuchte im nicht eingeschalteten Zustand, wobei die sich beidseitig einer zentralen Funktionseinheit 3 erstreckende Lichtleitscheibe 1 durchsichtig ist.

Diese Lichtleitscheibe 1 besteht bevorzugt aus einem lichtdurchlässigen Kunststoffmaterial, wie zum Beispiel Plexiglas, und ist - was in dieser Darstellung nicht zu sehen ist - zumindest an einer Oberfläche vollflächig mit mikro-optischen Strukturen versehen, die jeweils winzige Licht-Auskopplungspunkte bilden. Die Stirnseiten der Lichtleitscheibe 1 sind mit einer Reflexionsschicht 2 bedeckt, die auftreffendes Licht in die Scheibe zurück reflektiert. Die Funktionseinheit 3 erstreckt sich im Wesentlichen über die gesamte Länge der Leuchte und wird im Einzelnen noch beschrieben.

Zu sehen sind in Fig. 1 noch Aufhängeseile 4 der Leuchte sowie eine Stromzuleitung 5, da bei der gezeigten Ausführungsvariante die elektronischen Komponenten in einen Elektronikgehäuse 18 auf der Leuchte angebracht sind. Alternativ kann dieses als Baldachin ausgebildete Gehäuse mit den elektronischen Komponenten auch deckenseitig vorgesehen und die Anordnung so getroffen werden, dass die Energieversorgung der LEDs über die Aufhängeseile 4 erfolgt.

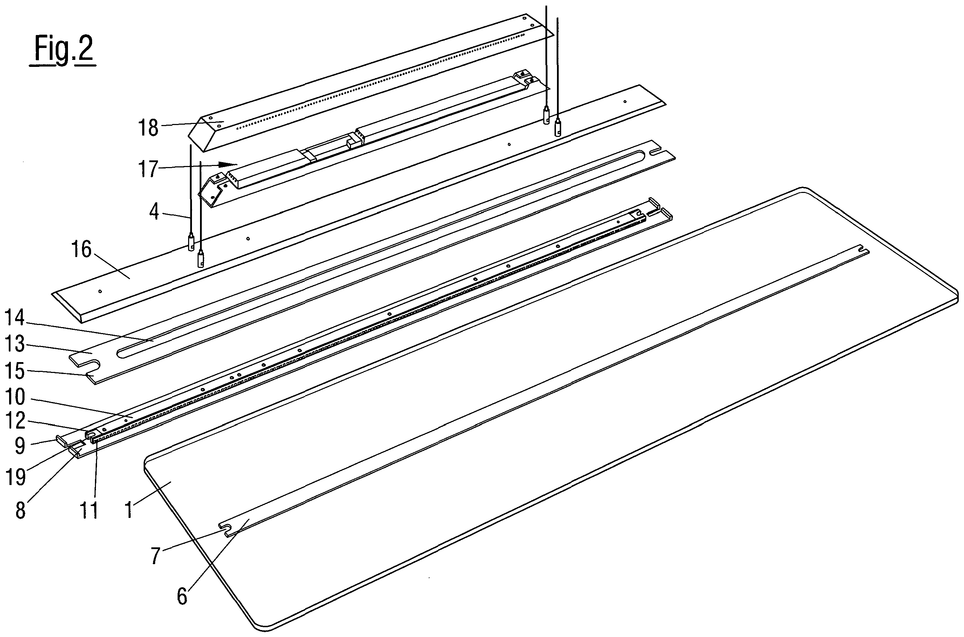

Nach Art einer Explosionsdarstellung zeigt die Fig. 2 die Komponenten der Leuchte nach Fig. 1.

Die bevorzugt einteilig ausgebildete Lichtleitscheibe 1 besitzt mittig eine langgestreckte Ausnehmung 6, wobei im Bereich der schmalen Stirnseiten der Ausnehmung Vorsprünge 7 vorgesehen sind, die zur formschlüssigen Kopplung mit der Funktionseinheit dienen.

Die Funktionseinheit umfasst eine Mehrzahl von Einzelkomponenten, nämlich ein Trag- und Reflexionsprofil 8, das mit dem sich im Wesentlichen über die Länge dieses Profils erstreckenden Kühlkörper 10 verschraubt ist, sowie ein Deck- und Reflexionsprofil 13, ein Abdeckgehäuse 16 sowie den die elektronischen Komponenten 17 aufnehmenden, im Zusammenhang mit Fig. 1 bereits erwähnten Elektronikgehäuse 18.

An dem mit dem Trag- und Reflexionsprofil 8 verschraubten Kühlkörper 10 sind seitlich unter Zwischenschaltung einer wärmeleitenden Trägerlage 12 LED-Streifeneinheiten 11 angebracht, die elektrisch miteinander verbunden sind und eine Folge von dicht aufeinanderfolgenden Einzel-LEDs bilden.

Beim Zusammenbau der Leuchte tauchen der Kühlkörper 10 und damit auch die von ihm getragenen LED-Streifen 11 in die Ausnehmung 6 der Lichtleitscheibe 1 von oben ein, wobei die genaue Relativposition zwischen beiden Komponenten durch die Abwinkelungen 9 an den Enden des Trag- und Reflexionsprofils 8 und die an der Lichtleitscheibe 1 vorgesehenen Vorsprünge 7 und die zugehörigen Ausnehmungen 19 an den Kühlkörperenden sichergestellt wird.

Nach dem Zusammenführen von Trag- und Reflexionsprofil 8 und Lichtleitscheibe 1 wird der mit den LEDs bestückte Kühlkörper 10 von oben in die Lichtleitscheibe 1 eingesetzt und mit dem Tragprofil 8 verschraubt. Dann wird das Deck- und Reflexionsprofil 13 aufgesetzt, das mittig eine langgestreckte Öffnung 14 und der Öffnung benachbart Stützschenkel 15 aufweist.

Über das mit dem Kühlkörper 10 verschraubbare Abdeckgehäuse 16 wird die so gebildete Einheit zusammengehalten, und mit dem Abdeckgehäuse 16 kann dann schließlich noch die die elektronischen Komponenten 17 enthaltende Einheit mit zugehörigem Elektronikgehäuse 18 verschraubt werden.

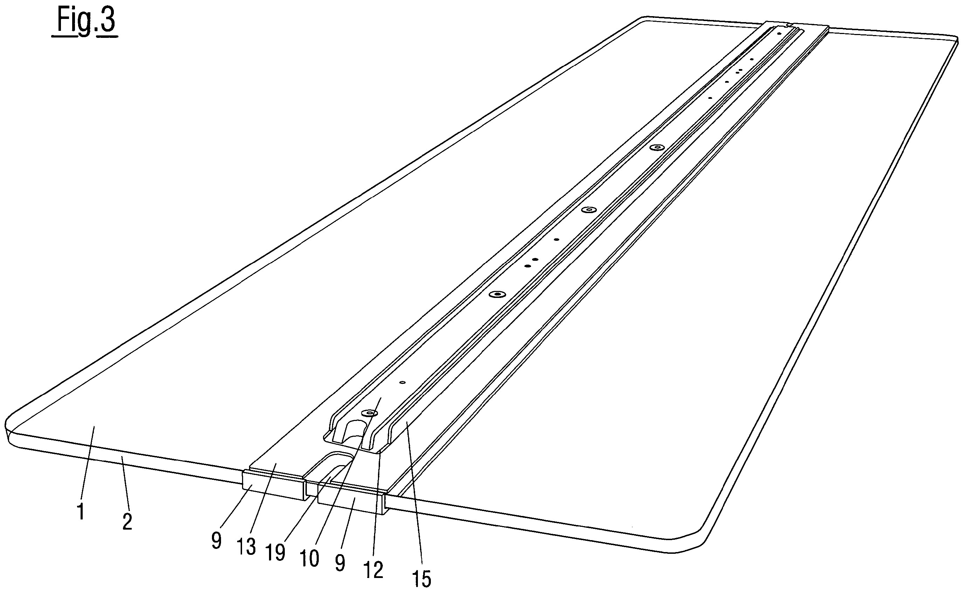

Fig. 3 zeigt die Leuchte nach Fig. 1 und 2 vor dem Anbringen des Abdeckgehäuses 16. Dabei ist zu erkennen, dass das Deck- und Reflexionsprofil 13 mit einem Ansatz zu Zentrierzwecken in gleicher Weise in die an den Enden des Kühlkörpers 10 vorgesehene Vertiefung 19 eingreift wie der entsprechende Vorsprung 7 an der Lichtleitscheibe 1. Die Stützschenkel 15 des Deck- und Reflexionsprofils 13 sind bezüglich des Kühlkörpers 10 beabstandet, was die Ausbildung eines Verkabelungsraums ermöglicht. Zwischen den beiderseits des Kühlkörpers 10 gelegenen Schenkeln von Trag- und Reflexionsprofil 8 und Deck- und Reflexionsprofil 13 sind Lichtkammern ausgebildet, wobei diese Schenkel so dimensioniert sind, dass auch ein Ausblendschutz bezüglich der LED-Streifen erhalten wird.

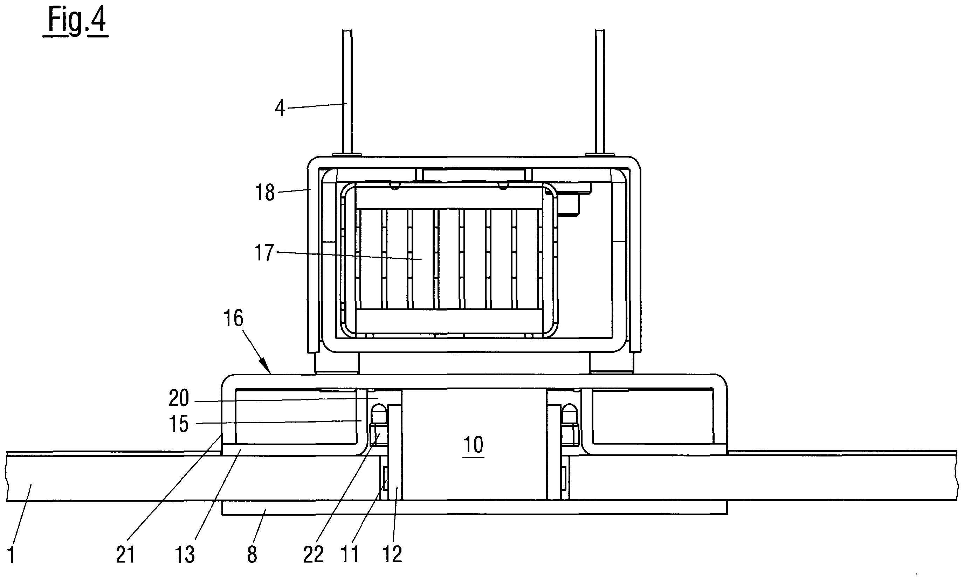

Fig. 4 zeigt in einer Querschnittsansicht den Aufbau der Funktionseinheit 3 und ihr Zusammenwirken mit der Lichtleitscheibe 1.

Mit dem massiven Kühlkörper 10 ist das Trag- und Reflexionsprofil 8 verschraubt. An beiden Seiten dieses Kühlkörpers 10 sind sich im Wesentlichen über die gesamte Länge des Kühlkörpers erstreckend unter Zwischenschaltung der wärmeleitenden Trägerlage 8 LED-Streifen 11 vorgesehen. Der Kühlkörper taucht in die Lichtleitscheibe 11, das heißt in deren langgestreckte Ausnehmung 6 ein, und die Lichtleitscheibe 1 liegt auf den beidseitig des Kühlkörpers 10 gelegenen Schenkeln des Trag- und Reflexionsprofils 8 auf. Durch geeignete Distanzelemente wird dabei ein definierter geringer Abstand zwischen den LED-Streifen 11 und den Einkoppelungs-Stirnseiten der Lichtleitscheibe 1 vorgegeben. Auf der Lichtleitscheibe 1 liegt das Deck- und Reflexionsprofil 13 relativ zentriert zum Kühlkörper 10 an. Auf diese Weise wird zwischen den an der Lichtleitscheibe 1 anliegenden Schenkeln von Trag- und Reflexionsprofil 8 und Deck- und Reflexionsprofil 13 jeweils eine Lichtkammer geschaffen, in der das von den LEDs eingestrahlte Licht in der Lichtleitscheibe 1 und damit in der Totalreflexion gehalten wird, was zur Folge hat, dass die sichtbaren Bereiche der Lichtleitfläche absolut gleichmäßig ausgeleuchtet werden und jede störende Streifenbildung vermieden wird.

Eingespannt wird die Lichtleitscheibe 1 zwischen den beiden Reflexionsprofilen 8 und 13 durch das wiederum mit dem Kühlkörper 10 verschraubte Abdeckgehäuse 16, das einerseits Druck ausübt auf den Stützschenkel 15 des Profilteils 13 und andererseits mit seiner vertikalen Seitenwand 21 auf dem freien Ende des Profilteils 13 abgestützt ist. Dadurch wird die Querstabilität der gesamten Anordnung sichergestellt.

Oberhalb der LED-Steifenanordnung 11 wird begrenzt vom Kühlkörper 10, dem Deck- und Reflexionsprofil 13 und dem Abdeckgehäuse 16 ein Verkabelungsraum 20 geschaffen, in dem auch Steckkontakte 22 zur Herstellung der erforderlichen elektrischen Verbindungen vorgesehen sind.

Auf das Abdeckgehäuse 16 aufgesetzt ist noch das die elektrischen Komponenten 17 aufnehmende Elektronikgehäuse 18.

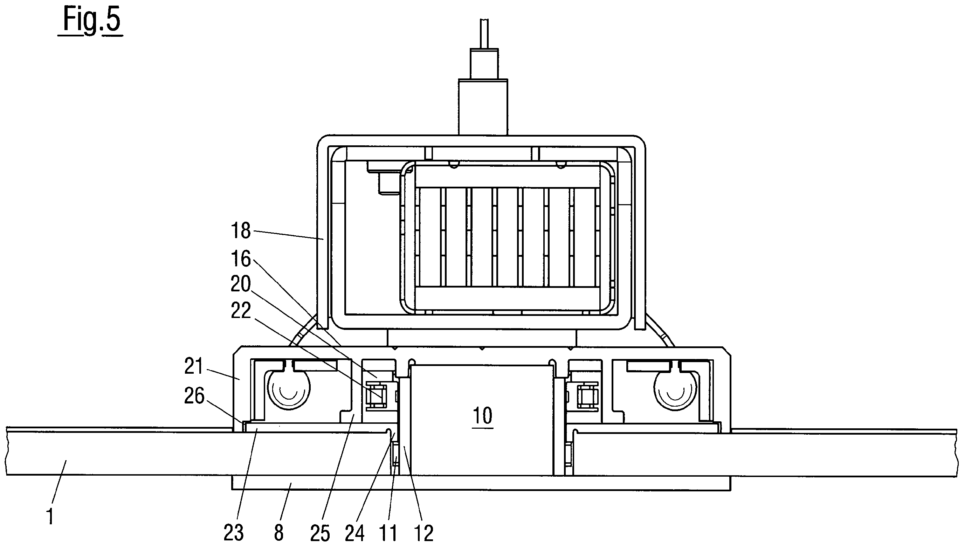

Die Fig. 5 zeigt eine Querschnittsansicht einer bevorzugten Ausführungsvariante der Erfindung, welche sich von der bisher beschriebenen Ausgestaltung vor allem dadurch unterscheidet, dass die Lichtkammern nicht beidseitig von reflektierend ausgebildeten metallischen Komponenten gebildet werden, sondern dass anstelle des metallischen Deck- und Reflexionsprofils 13 ein opales, hochreflektierendes Kunststoff-Profilteil 23 verwendet wird, das kühlkörperseitig vorzugsweise noch mit einer Abwinkelung 24 für die exakte Vorgabe eines minimalen Abstandes zwischen den LED-Streifen 11 und der Lichteinkopplungskante der Lichtleitscheibe 1 versehen ist und zusätzlich den über den LEDs liegenden Kantenanteil abdeckt, so dass auch in diesem Bereich kein Licht durch Reflexion von der Kante zurückstrahlen kann und damit verloren gehen würde.

Für den Zusammenhalt der so gebildeten Funktionseinheit sorgt das bevorzugt aus einem Aluminiumprofilteil bestehende Abdeckgehäuse 16, das einen vertikal auf dem Kunststoff-Profilteil 23 abgestützten Einspannsteg 25 besitzt und ferner mit seiner Seitenwand 21 auf der Lichtleitscheibe 1 abgestützt ist. Zur sicheren Positionierung des Kunststoff-Profilteils 23 trägt eine an der Seitenwand 21 des Abdeckgehäuses 16 vorgesehene, innenliegende Ausnehmung 26 bei, die das freie Ende des Kunststoff-Profilteils 23 aufnimmt.

Durch die geschilderte Einspannwirkung des Abdeckgehäuses 16 wird wiederum auch die notwendige Querstabilität der Leuchte sichergestellt. Der geringe Abstand zwischen der Stirnseite der Lichtleitscheibe und den ihr zugeordneten LEDs 11 ist durch die Abwinkelung 24 des Kunststoff-Profilteils 23 sehr genau vorgebbar und liegt vorzugsweise im Bereich von ein bis drei Zehntel Millimeter. Der Abstand zwischen den einzelnen LEDs in den LED-Streifen 11 ist ebenfalls sehr gering und liegt beispielsweise bei etwa 0,5 mm.

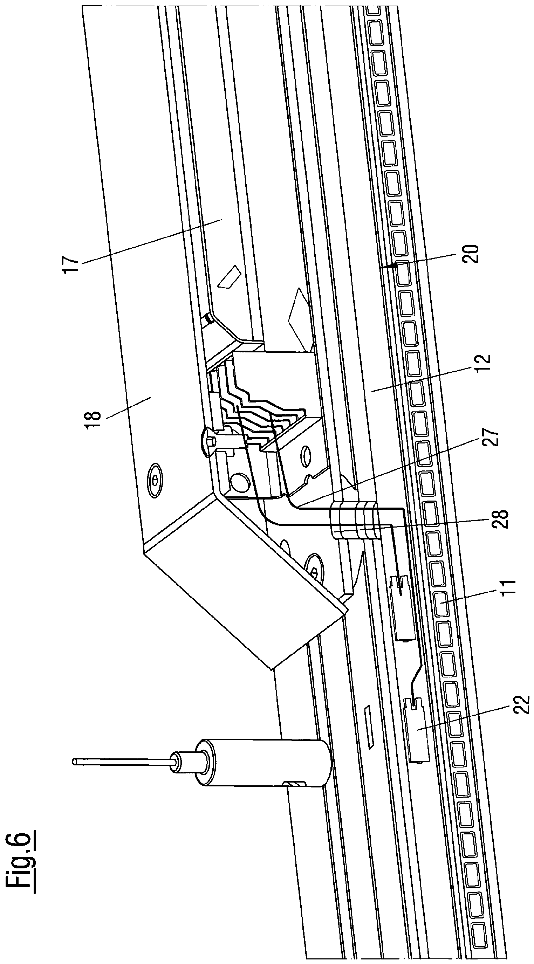

Die Darstellung nach Fig. 6 verdeutlicht den Vorteil des oberhalb der LED-Streifenanordnung 11 gelegenen Verkabelungsraums 20, der es nicht nur gestattet, die einzelnen Abschnitte der LED-Streifen in diesem Raum über entsprechende Steckverbindungen elektrisch miteinander zu verbinden, sondern es auch ermöglicht, Steckanschlüsse zur Verbindung mit den elektronischen Komponenten 17 der Leuchte so zu legen, dass kurze Anschlussleitungen verwendet werden können, die über geeignete Durchgangsöffnungen 28 zu den Klemmanschlüssen der Elektronikkomponenten 17 geführt werden.

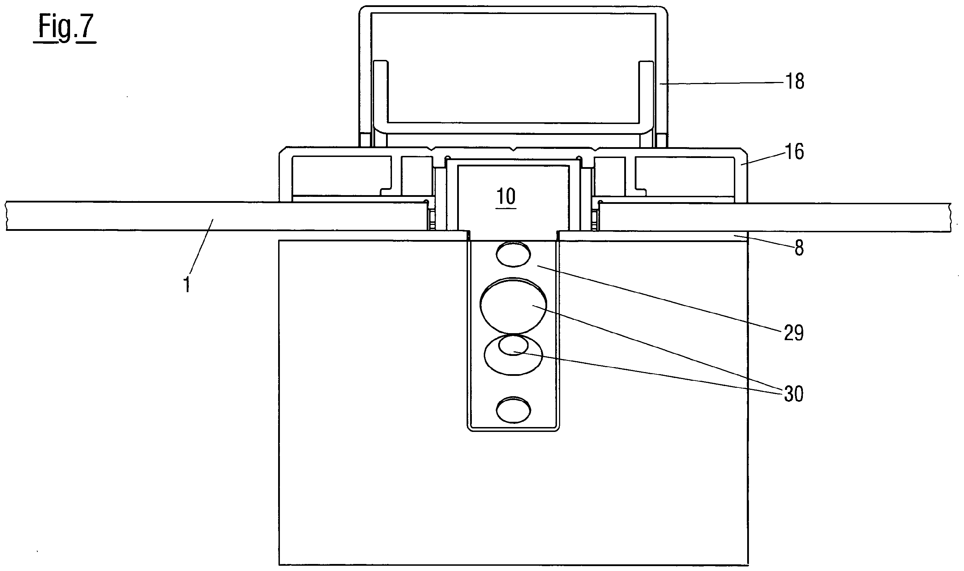

Die schematische Schnittansicht nach Fig. 7 zeigt die Integration einer Sensoreinheit 29 in die Leuchte, wozu im Trag- und Reflexionsprofil 8 sowie im darüberliegenden Bereich des Kühlkörpers 10 eine entsprechende Ausnehmung zur nach außen formschlüssigen Aufnahme dieser Einheit vorgesehen ist. Mittels dieser Sensoreinheit 29 kann eine Tageslichtsteuerung sowie eine Präsenzmeldung realisiert werden. Für eine Tageslichtsteuerung wird eine LED-Streifenanordnung aus kleinflächigen, dicht aneinandergrenzend angrenzenden LEDs mit jeweils wechselnder Farbtemperatur vorgesehen, wobei die einzelnen Farbkreise getrennt und vorzugsweise über einen Doppelkanaltreiber ansteuerbar sind. Die LEDs können beispielsweise eine Größe von 3 x 3 mm besitzen, wobei die unterschiedliche Farbtemperatur beispielsweise 2700 K und 6500 K betragen kann und die beiden Farbkreise in der Art ansteuerbar sind, dass sich die jeweils gewünschte, sich über den Tag hinweg ändernde Farbtemperatur ergibt.

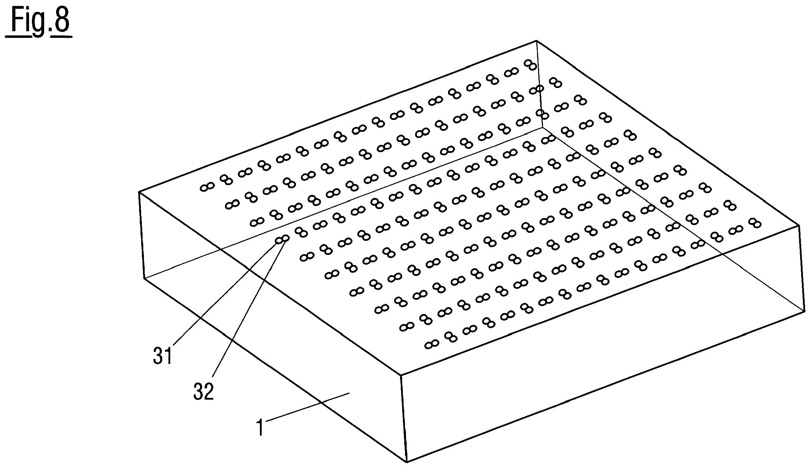

Die schematische Darstellung einer Lichtleitscheibe 1 nach Fig. 8 zeigt die erfindungsgemäße Besonderheit der Verwendung von Doppelpunkt-Auskoppelprismen 31, 32 in der vom Raum abgewandten Oberfläche der Lichtleitscheibe. Diese die Mikrostruktur der Lichtleitscheibe 1 bildende Vielzahl von Doppelpunkt-Auskoppelprismen 31, 32 kann so gestaltet sein, dass die beiden Auskoppelpunkte der Doppelpunkt-Auskoppelprismen direkt aneinandergrenzen, voneinander einen geringen Abstand haben oder sich geringfügig überschneiden bzw. ineinandergreifen. Die Doppelpunkt-Auskoppelprismen 31, 32 sind dabei in geraden Reihen angeordnet, in denen die Mittelachsen der Doppelpunkt-Auskoppelprismen in aufeinanderfolgenden Reihen jeweils unter einem ersten Anordnungswinkel und einem dazu rechtwinklig versetzten zweiten Anordnungswinkel verlaufen.

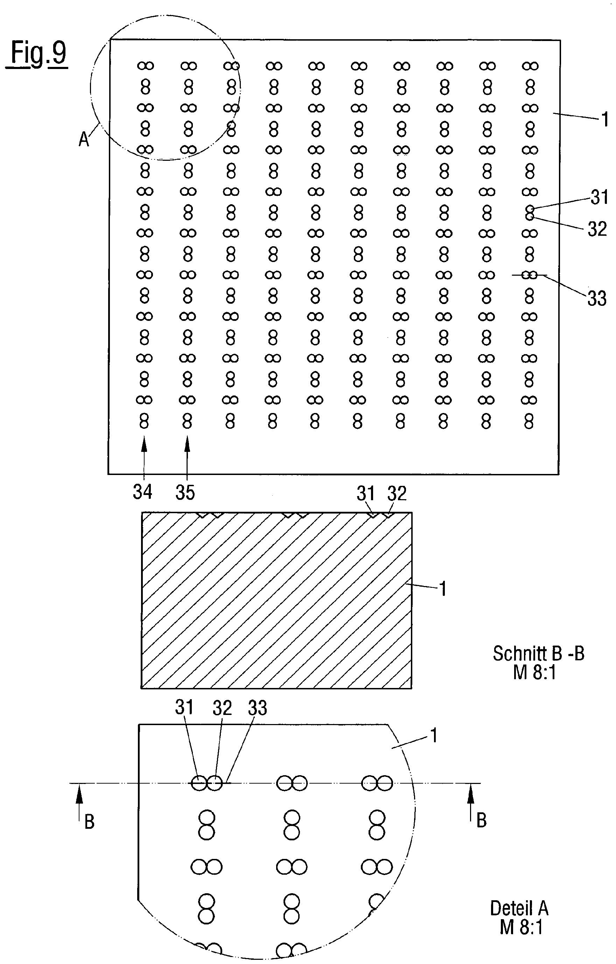

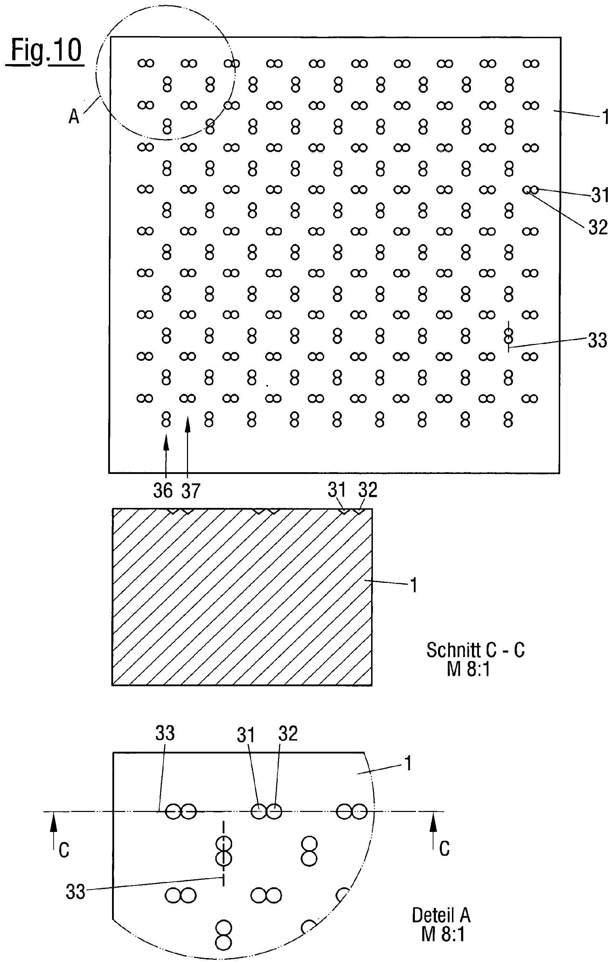

Bevorzugte Ausführungsbeispiele dieser neuartigen, effizienzsteigenden Mikrostruktur sind in den Fig. 9 und 10 dargestellt.

Zu sehen sind dabei neben einer das Gesamtstrukturprinzip zeigenden Draufsicht eine Schnittansicht sowie eine vergrößerte Detaildarstellung.

Bei der Ausführungsvariante nach Fig. 9 sind die Doppelpunkt-Auskoppelprismen 31, 32 mit jeweiliger Mittelachse 33 in geraden Reihen 34, 35 angeordnet, wobei der durch die Mittelachse 33 symbolisierte Anordnungswinkel aufeinanderfolgender Horizontalreihen um 90° versetzt ist.

Die Schnittansicht zeigt schematisch die Grundstruktur von Doppelpunkt-Auskoppelprismen 31, 32 und lässt auch erkennen, dass diese Strukturen vorzugsweise unter Verwendung geeigneter Prägewerkzeuge realisiert werden können.

Die in Fig. 10 gezeigte Ausführungsvariante einer Auskoppelmatrix unterscheidet sich von der Ausführungsform nach Fig. 9 dadurch, dass die Doppelpunkt-Auskoppelprismen 31, 32 mit gleichem Anordnungswinkel jeweils in einer Reihe angeordnet sind, aufeinanderfolgende Reihen jedoch Doppelpunkt-Auskoppelprismen mit unterschiedlichem Anordnungswinkel aufweisen.

Die Variante nach Fig. 10 ermöglicht es, das Rastermaß der Matrix zu verkleinern und damit mehr Auskoppelpunkte pro Flächeneinheit zu erzielen, wodurch die

Effizienz des Systems gesteigert wird. In jedem Falle muss aber sichergestellt sein, dass die Transparenz der Lichtfläche erhalten bleibt.

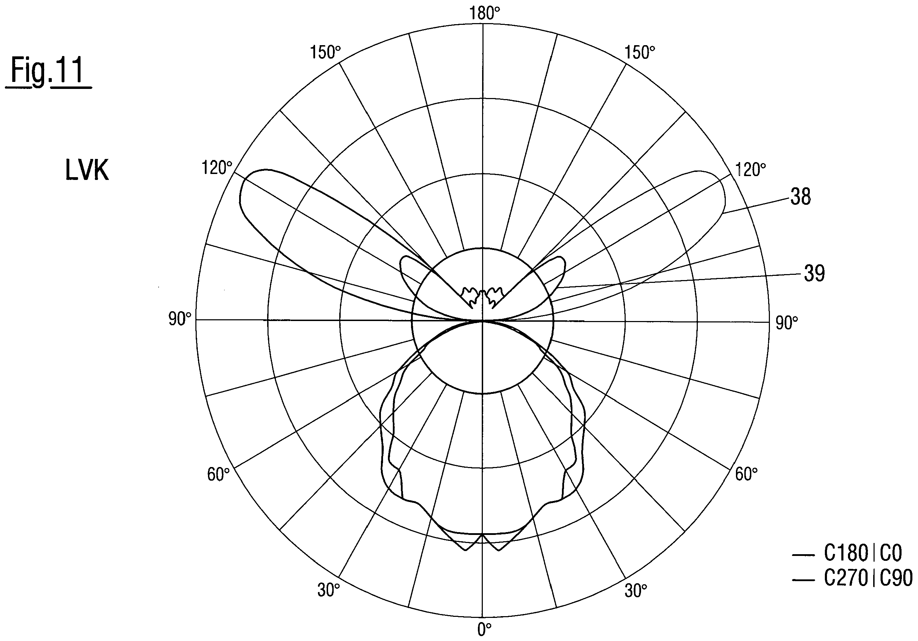

Fig. 11 zeigt in typischer Darstellung die Lichtverteilungskurve 38 in Querrichtung und die Lichtverteilungskurve 39 in Längsrichtung einer bevorzugten Ausführungsform der Erfindung, wie sie beispielsweise in Fig. 5 dargestellt ist, unter Verwendung von Doppelpunkt-Auskoppelprismen.

Zu erwähnen ist noch, dass der Bereich der Erfindung auch dann nicht verlassen wird, wenn anstelle einer einteiligen Lichtleitscheibe zwei Teil-Lichtscheiben verwendet werden, ansonsten aber die Ausgestaltung im Wesentlichen unverändert bleibt.

### Bezugszeichenliste

- 1: Lichtleitscheibe
- 2: Reflexionsschicht
- 3: Funktionseinheit
- 4: Aufhängung
- 5: Strom kabel
- 6: langgestreckte Ausnehmung
- 7: Vorsprung
- 8: Trag- und Reflexionsprofil
- 9.: Abwinkelung
- 10: Kühlkörper
- 11: LED-Streifen
- 12: wärmeleitende Trägerlage
- 13: Deck- und Reflexionsprofil
- 14: Öffnung
- 15: Stützschenkel
- 16: Abdeckgehäuse
- 17: elektronische Komponenten
- 18: Elektronikgehäuse
- 19: Vertiefung
- 20: Verkabelungsraum
- 21: Abdeckgehäuse-Seitenwand
- 22: Steckkontakt
- 23: reflektierendes Kunststoff-Profilteil
- 24: Abwinkelung
- 25: Einspannsteg
- 26: Ausnehmung
- 27: kurze Anschlussleitungen
- 28: Durchgangsöffnung
- 29: Sensoreinheit
- 30: Sensoren
- 31: Auskoppelpunkt von Doppelpunkt-Auskoppelprismen
- 32: Auskoppelpunkt von Doppelpunkt-Auskoppelprismen
- 33: Mittelachse
- 34: Reihe mit unterschiedlichen Anordnungswinkeln
- 35: Reihe mit unterschiedlichen Anordnungswinkeln
- 36: Reihe mit gleichen Anordnungswinkeln
- 37: Reihe mit gleichen Anordnungswinkeln
- 38: Lichtverteilungskurve Querrichtung
- 39: Lichtverteilungskurve Längsrichtung

## Patentansprüche

1. Leuchte, insbesondere Pendelleuchte,
mit einer eine raumseitige Direktlichtfläche bildenden Lichtleitscheibe (1) und einer Funktionseinheit (3) mit einer zumindest einer Längsseite der Lichtleitscheibe zugeordneten streifenförmigen Anordnung von LEDs (11) zur Einkopplung von Licht in die Lichtleitscheibe (1), wobei
die rahmenlos ausgebildete Lichtleitscheibe (1) über ihren schmalseitigen Umfang mit einer Reflexionsschicht (2) und mittig mit einer schmalen, langgestreckten Ausnehmung (6) zur Aufnahme der Funktionseinheit (3) versehen ist,
**dadurch gekennzeichnet,**
**dass** die Funktionseinheit (3) zumindest einen sich im Wesentlichen über die Länge der Ausnehmung (6) und in die Ausnehmung erstreckenden Kühlkörper (10) aufweist, an dem seitlich und der Lichtleitscheibe (1) gegenüberliegend die streifenförmig angeordneten LEDs (11) vorgesehen sind,
**dass** der Kühlkörper (10) auf einem sich über die Länge der Lichtleitscheibe (1) erstreckenden und diese haltenden Trag- und Reflexionsprofil (8) befestigt ist,
dessen Breite so gewählt ist, dass beiderseits des Kühlkörpers (10) zusammen mit einem gegenüberliegenden Deck- und Reflexionsprofil (13) jeweils eine Lichtkammer gebildet wird, in der die den streifenförmigen LEDs (11) zugeordneten innenliegenden Lichteinkopplungsbereiche der Lichtleitscheibe (1) aufgenommen sind und dass zumindest die raumabgewandte Oberfläche der Lichtleitscheibe (1) mit gleichmäßig über die Gesamtfläche verteilten, Licht reflektierenden, streuenden und auskoppelnden Mikrostrukturen oder stark reflektierenden Punktmustern versehen ist..

2. Leuchte nach Anspruch 1,
**dadurch gekennzeichnet,**
**dass** das Deck- und Reflexionsprofil (13) von einem mit dem Kühlkörper (10) verschraubbaren flachen Abdeckgehäuse (16) übergriffen wird, dessen Breite im Wesentlichen der Breite des Trag- und Reflexionsprofils (8) entspricht.

3. Leuchte nach Anspruch 2,
**dadurch gekennzeichnet,**
**dass** oberhalb der LED-Streifenanordnung (11) ein vom Kühlkörper (10), dem Deck- und Reflexionsprofil (13) und dem Abdeckgehäuse (16) begrenzter Verkabelungsraum (20) mit Steckklemmen (22) zur Verbindung aufeinanderfolgend angeordneter LED-Streifenabschnitte sowie zur Verbindung mit den elektronischen Komponenten (17) der Leuchte vorgesehen ist.

4. Leuchte nach einem oder mehreren der vorhergehenden Ansprüche, **dadurch gekennzeichnet,**
**dass** im Bereich der Enden des insbesondere aus Aluminiumvollmaterial bestehenden Kühlkörpers (10) und den Schmalseiten der langgestreckten Ausnehmungen (6) in der Lichtleitscheibe (1) jeweils eine von einem Vorsprung (7) und einer Vertiefung (19) gebildete Formschluss-Verbindung vorgesehen ist.

5. Leuchte nach einem oder mehreren der vorhergehenden Ansprüche, **dadurch gekennzeichnet,**
**dass** das Deck- und Reflexionsprofil (13) aus einem vorzugsweise weissopalen Profilabschnitt (23) aus einem Spezialkunststoff mit einem Reflexionsgrad von mindestens 90% und vorzugsweise mehr als 98% besteht, wobei vorzugsweise kühlkörperseitig eine Abwinkelung (24) zur exakten Vorgabe eines minimalen Abstandes zwischen den LEDs (11) und der Lichteinkopplungs-Stirnseite der Lichtleitscheibe (1) vorgesehen ist.

6. Leuchte nach Anspruch 5,
**dadurch gekennzeichnet,**
**dass** das vorzugsweise aus einem Aluminiumprofil bestehende Abdeckgehäuse (16) einen vertikal auf dem Kunststoff-Profilteil (23) abgestützten Einspannsteg (25) besitzt und die sich bis zur Lichtleitscheibe (1) erstreckende Seitenwand (21) des Abdeckgehäuses (16) eine innenliegende Ausnehmung (26) zur Aufnahme des freien Endes des Kunststoff-Profilteils (23) aufweist.

7. Leuchte nach einem oder mehreren der vorhergehenden Ansprüche, **dadurch gekennzeichnet,**
**dass** die LED-Streifen (11) über eine wärmeleitende Trägerlage (13) mit dem Kühlkörper (10) verbunden sind.

8. Leuchte nach einem oder mehreren der vorhergehenden Ansprüche, **dadurch gekennzeichnet,**
**dass** zur Aufnahme von elektronischen Komponenten (17) wie Treiber, Controller und dergleichen ein separates Elektronikgehäuse (18) vorgesehen ist, das thermisch isoliert auf dem Abdeckgehäuse (16) oder getrennt davon an der Decke befestigbar ist.

9. Leuchte nach einem oder mehreren der vorhergehenden Ansprüche, **dadurch gekennzeichnet,**
**dass** vorzugsweise mittig im Trag- und Reflexionsprofil (8) und in dem daran angrenzenden Kühlkörper (10) eine Ausnehmung zur Aufnahme einer Sensoreinheit (29) zur Tageslichtsteuerung und/oder Präsenzmeldung vorgesehen und ein abgeschirmtes Anschlusskabel dieser Sensoreinheit (29) direkt zum Kontroller (17) geführt ist.

10. Leuchte nach Anspruch 1,
**dadurch gekennzeichnet,**
**dass** die Mikrostruktur aus einer Vielzahl von direkt aneinandergrenzenden, gering beabstandeten oder gering ineinandergreifenden Auskoppelpunkten (31, 32) von Doppelpunkt-Auskoppelprismen mit definierter Mittelachse (33) besteht, und dass die Doppelpunkt-Auskoppelprismen (31, 32) in geraden Reihen angeordnet und die Mittelachsen (33) der Doppelpunkt-Auskoppelprismen (31, 32) in aufeinanderfolgenden Reihen jeweils unter einem ersten Anordnungswinkel und einem dazu um 90° gedrehten zweiten Anordnungswinkel verlaufen.

11. Leuchte nach Anspruch 10,
**dadurch gekennzeichnet,**
**dass** die Doppelpunkt-Auskoppelprismen (31, 32) mit erstem Anordnungswinkel bezüglich der Doppelpunkt-Auskoppelprismen (31, 32) mit zweitem Anordnungswinkel in den jeweiligen geraden Reihen versetzt sind.

12. Leuchte nach Anspruch 11,
**dadurch gekennzeichnet,**
**dass** die Doppelpunkt-Auskoppelprismen (31, 32) die Form rotationssymmetrischer Kegel oder Kegelstümpfe besitzen oder von mehrflächigen Prismen mit mehreckiger, beispielsweise quadratischer oder sechseckiger Grundfläche gebildet sind.

13. Leuchte nach einem oder mehreren der vorhergehenden Ansprüche, **dadurch gekennzeichnet,**
**dass** eine LED-Streifenanordnung (11) aus kleinflächigen, dicht aneinandergrenzend angeordneten LEDs mit jeweils wechselnder Farbtemperatur vorgesehen ist und dass die einzelnen Farbkreise getrennt über einen Doppelkanaltreiber ansteuerbar sind.

## Claims

1. A luminaire, in particular a suspended luminaire,
comprising a light guide panel (1) forming a room-side direct light surface; and a functional unit (3) having a strip-shaped arrangement of LEDs (11) associated with at least one longitudinal side of the light guide panel for coupling light into the light guide panel (1), wherein
the frameless light guide panel (1) is provided with a reflection layer (2) over its narrow-side periphery and is centrally provided with a narrow, elongated recess (6) for receiving the functional unit (3); **characterized in that**
the functional unit (3) has at least one cooling element (10) which extends substantially over the length of the recess (6) and into the recess and at which the LEDs (11) arranged in a strip-shaped manner are provided laterally and disposed opposite the light guide panel (1);
**in that** the cooling element (10) is fastened on a support and reflection section (8) which extends over the length of the light guide panel (1) and holds it,
with the width of said support and reflection section (8) being selected such that a respective light chamber, in which the inwardly disposed light coupling regions of the light guide panel (1) associated with the strip-shaped LEDs (11) are received, is formed at both sides of the cooling element (10) together with an oppositely disposed cover and reflection section (13); and **in that** at least the surface of the light guide panel (1) remote from the room is provided with microstructures which are distributed uniformly over the total surface and which reflect, scatter and decouple light or is provided with highly reflective dot patterns.

2. A luminaire in accordance with claim 1,
**characterized in that**
the cover and reflection section (13) is engaged over by a flat cover housing (16) which can be screwed to the cooling element (10) and whose width substantially corresponds to the width of the support and reflection section (8).

3. A luminaire in accordance with claim 2,
**characterized in that**
a cabling space (20) is provided above the LED strip arrangement (11), said cabling space (20) being bounded by the cooling element (10), by the cover and reflection section (13) and by the cover housing (16) and comprising plug-in terminals (22) for connecting consecutively arranged LED strip sections and for connecting to the electronic components (17) of the luminaire.

4. A luminaire in accordance with one or more of the preceding claims, **characterized in that**
a respective form-fitted connection formed by a projection (7) and by a depression (19) is provided in the region of the ends of the cooling element (10), which is in particular composed of a solid aluminum material, and of the narrow sides of the elongated recesses (6) in the light guide panel (1).

5. A luminaire in accordance with one or more of the preceding claims, **characterized in that**
the cover and reflection section (13) comprises a section portion (23), preferably a white-opal section portion (23), composed of a special plastic having a degree of reflection of at least 90%, and preferably of more than 98%, with an angled portion (24) preferably being provided at the cooling element side for an exact specification of a minimum spacing between the LEDs (11) and the light coupling end face of the light guide panel (1).

6. A luminaire in accordance with claim 5,
**characterized in that**
the cover housing (16), which is preferably composed of an aluminum section, has a clamping web (25) vertically supported on the plastic section part (23) and the side wall (21) of the cover housing (16) extending up to the light guide panel (1) has an inwardly disposed recess (26) for receiving the free end of the plastic section part (23).

7. A luminaire in accordance with one or more of the preceding claims, **characterized in that**
the LED strips (11) are connected to the cooling element (10) via a thermally conductive support layer (13).

8. A luminaire in accordance with one or more of the preceding claims, **characterized in that**
a separate electronics housing (18) is provided for receiving electronic components (17) such as drivers, controllers and the like and is fastenable to the ceiling in a thermally isolated manner on the cover housing (16) or separately therefrom.

9. A luminaire in accordance with one or more of the preceding claims, **characterized in that**
a recess for receiving a sensor unit (29) for daylight control and/or presence detection is preferably centrally provided in the support and reflection section (8) and in the cooling element (10) adjacent thereto and a shielded connector cable of this sensor unit (29) is guided directly to the controller (17).

10. A luminaire in accordance with claim 1,
**characterized in that**
the microstructure comprises a plurality of directly adjacent, slightly spaced apart or slightly mutually engaging decoupling points (31, 32) of dual-point decoupling prisms having a defined center axis (33); and **in that** the dual-point decoupling prisms (31, 32) are arranged in straight rows and the center axes (33) of the dual-point decoupling prisms (23) extend in consecutive rows respectively at a first arrangement angle and at a second arrangement angle rotated by 90° thereto.

11. A luminaire in accordance with claim 10,
**characterized in that**
the dual-point decoupling prisms (31, 32) having a first arrangement angle are offset in the respective straight rows with respect to the dual-point decoupling prisms (31, 32) having a second arrangement angle.

12. A luminaire in accordance with claim 11,
**characterized in that**
the dual-point decoupling prisms (31, 32) have the shape of rotationally symmetrical cones or truncated cones or are formed by multi-surface prisms having a polygonal base surface, for example, a square or hexagonal base surface.

13. A luminaire in accordance with one or more of the preceding claims, **characterized in that**
an LED strip arrangement (11) comprising small-surface LEDs arranged closely adjacent to one another and having respective changing color temperatures are provided; and **in that** the individual color circles can be controlled separately via a dual-channel driver.

## Revendications

1. Luminaire, en particulier luminaire suspendu,
comprenant une plaque guide de lumière (1) formant une surface d'éclairage direct côté salle et une unité fonctionnelle (3) avec un agencement de diodes électroluminescentes (DELs) (11) en forme de ruban associé à au moins un côté long de la plaque guide de lumière et destiné au couplage de lumière jusque dans la plaque guide de lumière (1), dans lequel
la plaque guide de lumière (1) réalisée dépourvue de cadre est dotée d'une couche de réflexion (2) sur sa périphérie du côté court et d'un évidement étroit allongé (6) au milieu pour la réception de l'unité fonctionnelle (3),
**caractérisé en ce que**
l'unité fonctionnelle (3) comprend au moins un corps de refroidissement (10) qui s'étend essentiellement sur la longueur de l'évidement (6) et jusque dans l'évidement, corps sur lequel sont prévues les DELs (11) agencées en forme de ruban sur le côté et à l'opposé de la plaque guide de lumière (1),
**en ce que** le corps de refroidissement (10) est fixé sur un profilé de support et de réflexion (8) qui s'étend sur la longueur de la plaque guide de lumière (1) en maintenant celle-ci,
dont la largeur est ainsi choisie qu'une chambre de lumière respective est formée des deux côtés du corps de refroidissement (10) conjointement avec un profil de couverture et de réflexion (13) situé à l'opposé, chambre dans laquelle sont reçues les zones de couplage de lumière, associées aux DELs (11) en forme de ruban, de la plaque guide de lumière (1), et **en ce qu'**au moins la surface de la plaque guide de lumière (1) détournée de la salle est dotée de microstructures ou de motifs ponctuels fortement réfléchissants, répartis régulièrement sur la totalité de la surface, qui assurent une réflexion, une diffusion et un découplage de la lumière.

2. Luminaire selon la revendication 1,
**caractérisé en ce que**
le profil de couverture et de réflexion (13) est coiffé par un boîtier de recouvrement plat (16) susceptible d'être vissé avec le corps de refroidissement (10), dont la largeur correspond essentiellement à la largeur du profilé de support et de réflexion (8).

3. Luminaire selon la revendication 2,
**caractérisé en ce que**
il est prévu au-dessus de l'agencement de DELs en forme de ruban (11), un compartiment de câblage (20) délimité par le corps de refroidissement (10), par le profilé de couverture et de réflexion (13) et par le boîtier de recouvrement (16), avec des bornes à enfichage (22) pour la liaison de tronçons de DELs en forme de ruban agencés les uns à la suite des autres ainsi que pour la liaison avec les composants électroniques (17) du luminaire.

4. Luminaire selon l'une ou plusieurs des revendications précédentes, **caractérisé en ce que**
dans la région des extrémités du corps de refroidissement (10), constitué en particulier en un matériau plein à base d'aluminium, et des petits côtés des évidements allongés (6), il est prévu une liaison à coopération de formes dans la plaque guide de lumière (1), réalisée respectivement par une saillie (7) et par un creux (19).

5. Luminaire selon l'une ou plusieurs des revendications précédentes, **caractérisé en ce que**
le profilé de couverture et de réflexion (13) est constitué d'un tronçon de profilé (23), de préférence de couleur opale blanche en une matière plastique spéciale présentant un degré de réflexion d'au moins 90 % et de préférence plus de 98 %, et dans lequel il est prévu de préférence du côté du corps de refroidissement un coudage (24) pour imposer de façon exacte une distance minimum entre les DELs (11) et le côté frontal de couplage de lumière de la plaque guide de lumière (1).

6. Luminaire selon la revendication 5,
**caractérisé en ce que**
le boîtier de recouvrement (16) constitué de préférence d'un profilé en aluminium possède une barrette de serrage (25) soutenue verticalement sur la partie de profilé en matière plastique (23), et la paroi latérale (21), du boîtier de recouvrement (16), qui s'étend jusqu'à la plaque guide de lumière (1) comporte un évidement intérieur (26) pour la réception de l'extrémité libre de la partie de profilé (23) en matière plastique.

7. Luminaire selon l'une ou plusieurs des revendications précédentes, **caractérisé en ce que**
les rubans de DELs (11) sont reliés au corps de refroidissement (10) via une couche porteuse thermoconductrice (13).

8. Luminaire selon l'une ou plusieurs des revendications précédentes, **caractérisé en ce que**
pour la réception de composants électroniques (17), tels que pilotes, contrôleurs et similaires, il est prévu un boîtier électronique (18) séparé, qui peut être fixé au plafond, en étant thermiquement isolé sur le boîtier de recouvrement (16) ou séparément de celui-ci.

9. Luminaire selon l'une ou plusieurs des revendications précédentes, **caractérisé en ce que**
il est prévu de préférence au milieu dans le profilé de support et de réflexion (8) et dans le corps de refroidissement (10) adjacent à celui-ci un évidement pour la réception d'une unité de capteur (29) pour la commande de lumière diurne et/ou pour la détection de présence, et un câble de connexion blindé de cette unité de capteur (29) est mené directement au contrôleur (17).

10. Luminaire selon la revendication 1,
**caractérisé en ce que**
la microstructure est constituée d'une pluralité de points de découplage (31, 32) soit directement adjacents les uns aux autres, soit à faible distance, soit encore faiblement en engagement les uns dans les autres, de prismes de découplage ponctuels doubles avec un axe médian défini (33), et **en ce que** les prismes de découplage ponctuels doubles (31, 32) sont agencés dans des rangées rectilignes et les axes médians (33) des prismes de découplage ponctuels doubles (31, 32) dans des rangées mutuellement successives s'étendent respectivement sous un premier angle d'agencement et sous un second angle d'agencement tourné de 90° par rapport à celui-ci.

11. Luminaire selon la revendication 10,
**caractérisé en ce que**
les prismes de découplage ponctuels doubles (31, 32) présentant le premier angle d'agencement sont décalés par rapport aux prismes de découplage ponctuels doubles (31, 32) présentant le second angle d'agencement dans les rangées rectilignes respectives.

12. Luminaire selon la revendication 11,
**caractérisé en ce que**
les prismes de découplage ponctuels doubles (31, 32) possèdent la forme de cône ou de tronc de cône à symétrie de révolution, ou sont formés par des prismes à plusieurs facettes comportant une surface de base polygonale, par exemple quadratique ou hexagonale.

13. Luminaire selon l'une ou plusieurs des revendications précédentes, **caractérisé en ce que**
il est prévu un agencement de DELs en ruban (11) formé de DELs de petite surface étroitement adjacentes les unes aux autres présentant une température de couleur respectivement changeante, et **en ce que** les circuits de couleurs individuels sont pilotables séparément via un pilote à double canal.
